# EUROPÄISCHE PATENTSCHRIFT

(11) **EP 2 019 055 B1**
(45) Veröffentlichungstag und Bekanntmachung des Hinweises auf die Patenterteilung: **12.05.2010**
(21) Anmeldenummer: 07450210.5
(22) Anmeldetag: 26.11.2007
(51) Int. Cl.: B65G 39/20, B65G 21/22

(54) **Lagereinheit für eine Förderanlage zum Transport von Gütern mittels eines Förderbandes**
Bearing unit for a conveying device for transporting goods by means of a conveyor belt
Unité de coussinet pour un convoyeur destiné au transport de marchandises à l'aide d'un transporteur à courroie

(30) Priorität: 24.07.2007 AT 11732007
(43) Veröffentlichungstag der Anmeldung: 28.01.2009
(73) Patentinhaber: Innova Patent GmbH, 6960 Wolfurt (AT)
(72) Erfinder: Trieb, Herbert, 6911 Lochau (AT)
(74) Vertreter: Atzwanger, Richard

(56) Entgegenhaltungen:
- DE-A1- 10 348 516
- DE-B- 1 026 226
- DE-B- 1 060 780
- DE-C- 952 517
- GB-A- 740 906
- US-A- 4 101 180

## Beschreibung

Die gegenständliche Erfindung betrifft eine Lagereinheit für die Tragrollen einer Förderanlage zum Transport von Gütern mittels eines Förderbandes, welches an den beiden Enden der Anlage über Umlenktrommeln geführt ist und welches an der Unterseite von quer zur Bewegungsrichtung des Förderbandes ausgerichteten und in Bewegungsrichtung des Förderbandes voneinander im Abstand befindlichen Tragbalken befestigt ist, wobei an den beiden Enden der Tragbalken jeweils Tragrollen vorgesehen sind, welche längs zwei Paaren von Tragseilen bzw. Tragschienen der Förderanlage, welche dem vorlaufenden bzw. dem rücklaufenden Trum des Förderbandes zugeordnet sind, abrollen und wobei die Lagereinheit mit einem Lagerzapfen ausgebildet ist, welcher einen Fortsatz aufweist, welcher am zugeordneten Tragbalken lösbar befestigt ist.

Bei derartigen Förderanlagen, welche z.B. aus der EP-A1 1452466 bekannt sind, sind die Tragbalken an ihren stirnseitigen Enden mit Bohrungen ausgebildet, in welche ein vom Lagerzapfen der Lagereinheit abragender bolzenförmiger Fortsatz einsetzbar und mittels Schraubbolzen am Tragbalken befestigt ist. Sofern das Erfordernis besteht, eine Lagereinheit auszutauschen, müssen die Schraubbolzen entfernt werden und muss der vom Lagerzapfen abragende Fortsatz aus der im Tragbalken vorgesehenen Bohrung herausgezogen werden.

Diese bekannte Befestigung der Lagereinheiten an den Tragbalken ist jedoch deshalb nicht den Erfordernissen entsprechend, da die in die Tragbalken eingesetzten bolzenartigen Fortsätze der Lagerzapfen bzw. die Schraubbolzen starken Korrosionen unterliegen, weswegen es Schwierigkeiten verursachen kann, die zwischen den Tragbalken und den Fortsätzen bestehenden Befestigungen zu lösen, um die Lagereinheiten von den Tragbalken entfernen und durch neue Lagereinheiten ersetzen zu können.

Der gegenständlichen Erfindung liegt somit die Aufgabe zugrunde, eine Lagereinheit für eine Förderanlage zum Transport von Gütern mittels eines Förderbandes zu schaffen, bei welcher die Befestigung der Lagereinheiten an den Tragbalken so ausgebildet ist, dass sie auch unter ungünstigen Bedingungen jederzeit in einfacher Weise gelöst werden kann. Dies wird erfindungsgemäß dadurch erzielt, dass der Fortsatz als nach oben offener Trog ausgebildet ist, auf welchen das zugeordnete Ende des Tragbalkens aufsetzbar und an diesem lösbar befestigbar ist.

Vorzugsweise ist die Innenfläche des trogartigen Fortsatzes im Querschnitt angenähert trapezartig ausgebildet. Weiters ist vorzugsweise der trogartige Fortsatz mit mindestens einer Bohrung ausgebildet, in welche ein der Verbindung der Lagereinheit mit dem zugeordneten Ende des Tragbalkens dienender Schraubbolzen einsetzbar ist. Weiters ist vorzugsweise der trogartige Fortsatz gegenüber dem Lagerzapfen derart versetzt angeordnet, dass bei der Verbindung der Lagereinheit mit einem Tragbalken die Lagerachse der Tragrolle und die Mittelachse des Tragbalkens zumindest angenähert koaxial sind.

Der Gegenstand der Erfindung ist nachstehend anhand eines in der Zeichnung dargestellten Ausführungsbeispieles näher erläutert. Es zeigen:
- FIG.1: einen Abschnitt einer Transportanlage mit erfindungsgemäßen Lage- reinheiten, in axonometrischer Darstellung;
- FIG.2: eine erfindungsgemäße Lagereinheit, in Seitenansicht, und teilweise im Schnitt;
- FIG.3, FIG.3a: den mit einem erfindungsgemäßen Fortsatz ausgebildeten Lagerzapfen einer erfindungsgemäßen Lagereinheit, in axonometrischer Darstellung und im Schnitt.

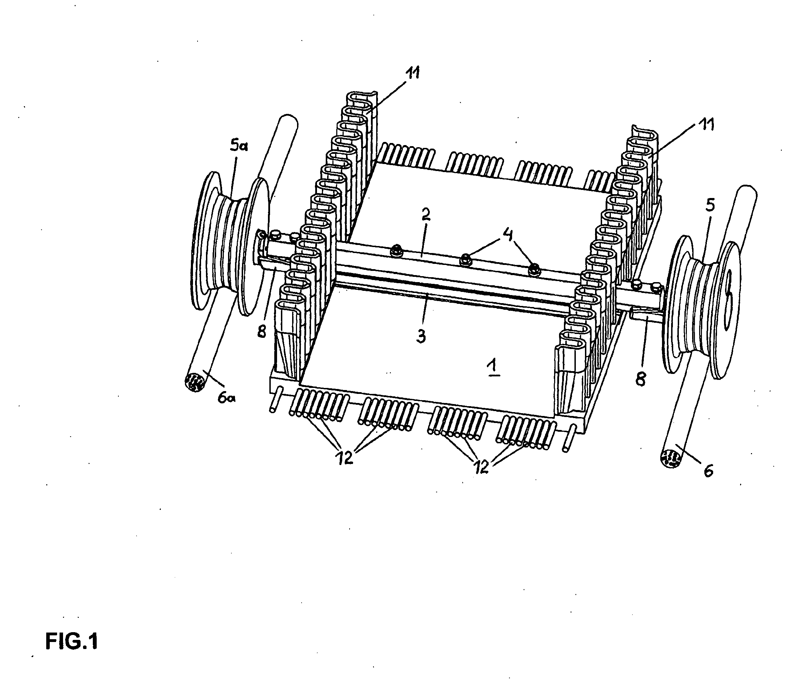

In FIG.1 ist ein Abschnitt des Förderbandes 1 in einer Förderanlage zum Transport von Gütern dargestellt. Wie daraus ersichtlich ist, ist das Förderband 1 an seinen beiden Seitenrändern mit Wellkanten 11 ausgebildet, durch welche es ermöglicht wird, dieses an den beiden Enden der Förderanlage über Umlenktrommeln zu führen. Wie daraus weiters ersichtlich ist, ist das Förderband 1 mit einer Vielzahl von dicht nebeneinander befindlichen Verstärkungsseilen 12 ausgebildet, aufgrund welcher dieses eine große Tragfähigkeit aufweist. Das Förderband 1 ist an der Unterseite von sich quer zu dessen Bewegungsrichtung erstreckenden Tragbalken 2 befestigt, wobei sich zwischen dem Förderband 1 und den Tragbalken 2 jeweils eine elastische Dichtungsleiste 3 befindet. Die Befestigung des Förderbandes 1 an den Tragbalken 2 erfolgt z.B. mittels das Förderband 1 und die Tragbalken 2 durchsetzender Schrauben 4. Durch die zwischen dem Förderband 1 und den Tragbalken 2 befindlichen Dichtungsleisten 3 wird vermieden, dass sich zwischen dem Förderband 1 und den Tragbalken 2 jeweils Spalten ausbilden, in welche Fördergut eindringt, wodurch das Förderband 1 einem erhöhten Verschleiß unterliegt.

An den beiden Enden der Tragbalken 2 befinden sich Laufrollen 5 und 5a, welche längs eines Paares von Tragseilen 6 und 6a bzw. von Tragschienen geführt sind. Dabei sind sowohl dem mit Transportgut beladenen Trum des Förderbandes 1 als auch dem unbeladenen Trum des Förderbandes 1 jeweils ein Paar von Tragseilen 6 und 6a bzw. von Tragschienen zugeordnet, längs welcher das Förderband 1 zwischen den in den Endstationen befindlichen Umlenk- bzw. Antriebstrommeln im Umlauf bewegt wird.

Die Befestigung der Laufrollen 5 bzw. 5a an den Tragbalken 2 erfolgt durch Fortsätze 8 von Lagereinheiten, welche an den zugeordneten Enden der Tragbalken 2 befestigt sind.

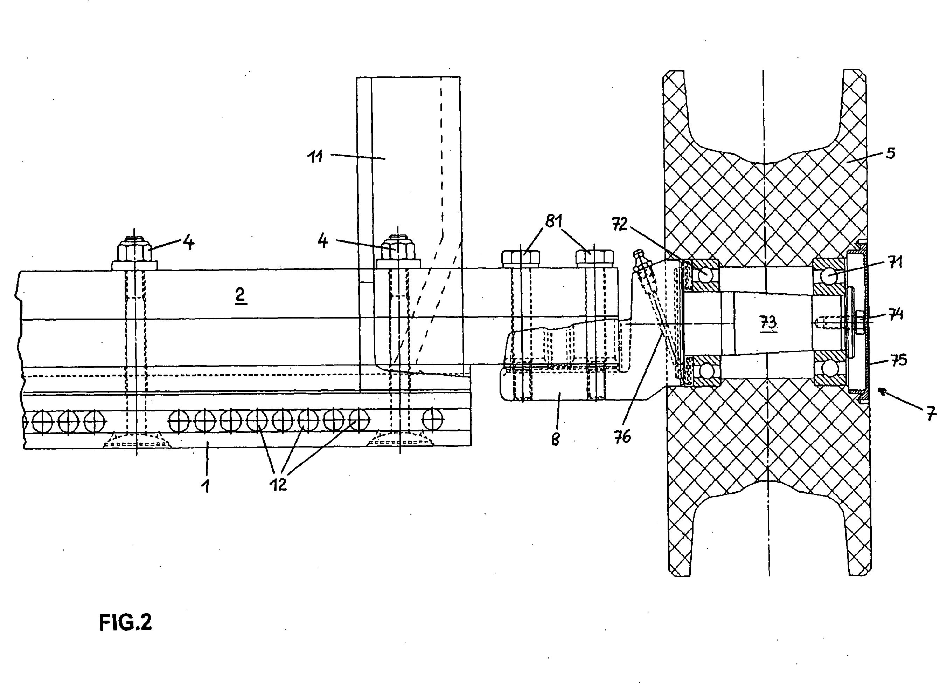

Wie dies aus FIG.2 ersichtlich ist, ist den Laufrollen 5 bzw. 5a jeweils eine Lagereinheit 7 zugeordnet, welche aus innerhalb der Laufrollen 5 bzw. 5a befindlichen zwei Lagerringen 71 und 72 und aus einem in diese Lagerringe 71 und 72 eingesetzten Lagerzapfen 73 besteht. Die axiale Sicherung des Lagerzapfens 73 erfolgt durch eine Sicherungsschraube 74, welche durch eine Kappe 75 abgedeckt ist. Zudem befindet sich im Lagerzapfen 73 ein Kanal 76 zur Zufuhr eines Schmiermittels. Der Lagerzapfen 73 ist mit dem axial abragenden Fortsatz 8 ausgebildet, welcher als nach oben offener Trog ausgebildet ist, wobei dessen Innenfläche der Außenfläche des unteren Teiles des Tragbalkens 2 gegengleich ausgebildet ist. Dabei ist das zugeordnete Ende des betreffenden Tragbalkens 2 von oben her in den trogartig ausgebildeten Fortsatz 8 eingesetzt und in diesem mittels zweier Schrauben 81, welche das freie Ende des Tragbalkens 2 durchsetzen und in den Fortsatz 8 eingeschraubt sind, befestigt.

Zur Lösung dieser Befestigung, um die Lagereinheit 7 entfernen zu können, werden die beiden Schrauben 81 entfernt, worauf der Fortsatz 8 vom Tragbalken 2 nach unten wegbewegt werden kann.
Durch diese Art der Befestigung der Lagereinheit 7 am Tragbalken 2 werden die dem bekannten Stand der Technik anhaftenden Nachteile in der Befestigung der Lagereinheiten 7 an den Tragbalken 2 vermieden.

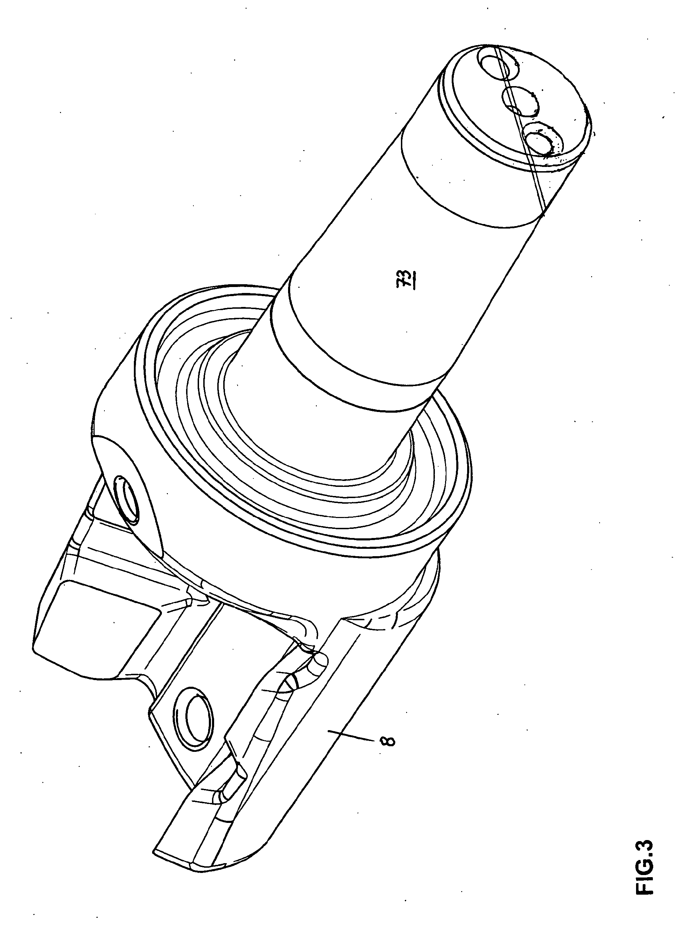

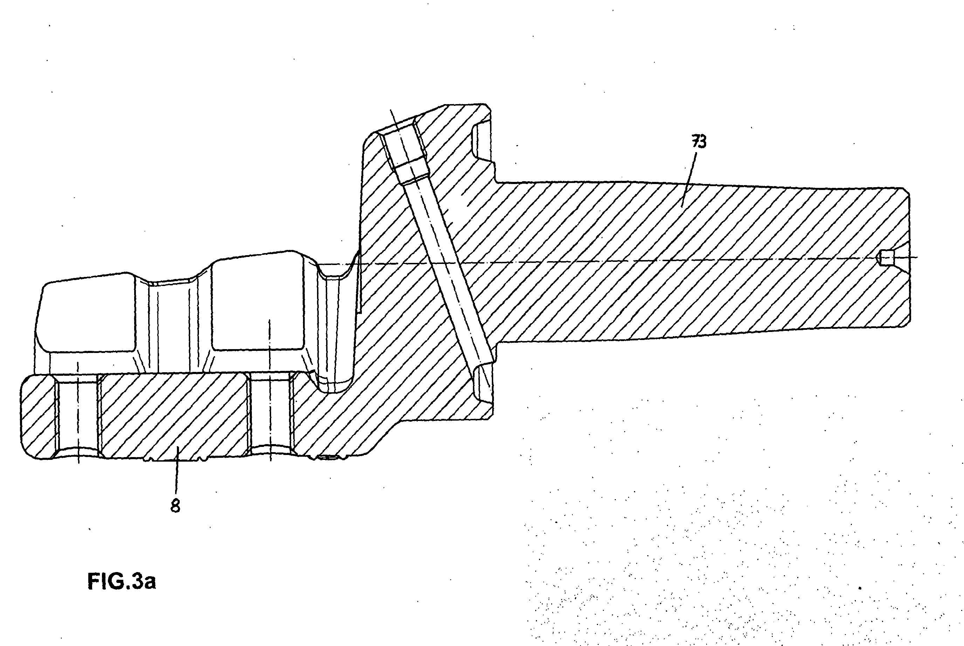

Aus den FIG.3 und FIG.3a ist die Ausbildung des mit dem Fortsatz 8 ausgebildeten Lagerzapfens 73 nochmals ersichtlich. Da der Tragbalken 2 als Vollprofil einen sechseckigen Querschnitt aufweist, ist dementsprechend die Innenfläche des trogförmigen Fortsatzes 8 im Querschnitt angenähert trapezförmig ausgebildet.
Da weiters der Fortsatz 8 gegenüber dem Lagerzapfen 73 quer zu dessen Achse versetzt ist, verlaufen die Mittelachse des Tragbalkens 2 und die Drehachse des Lagerzapfens 73 angenähert koaxial.

## Patentansprüche

1. Lagereinheit (7) für die Tragrollen (5, 5a) einer Förderanlage zum Transport von Gütern mittels eines Förderbandes (1), welches an den beiden Enden der Anlage über Umlenktrommeln geführt ist und welches an der Unterseite von quer zur Bewegungsrichtung des Förderbandes (1) ausgerichteten und in Bewegungsrichtung des Förderbandes (1) voneinander im Abstand befindlichen Tragbalken [2] befestigt ist, wobei an den beiden Enden der Tragbalken (2) jeweils Tragrollen (5,5a) vorgesehen sind, welche längs zwei Paaren von Tragseilen (6,6a) bzw. Tragschienen der Förderanlage, welche dem vorlaufenden bzw. dem rücklaufenden Trum des Förderbandes (1) zugeordnet sind, abrollen und wobei die Lagereinheit [7] mit einem Lagerzapfen (73) ausgebildet ist, welcher einen Fortsatz (8) aufweist, welcher am zugeordneten Tragbalken [2] lösbar befestigbar ist, **dadurch gekennzeichnet, dass** der Fortsatz (8) als nach oben offener Trog ausgebildet ist, auf welchen das zugeordnete Ende des Tragbalkens (2) aufsetzbar und an diesem lösbar befestigbar ist.

2. Lagereinheit (7) nach Patentanspruch 1, **dadurch gekennzeichnet dass** die Innenfläche des trogartigen Fortsatzes (8) im Querschnitt angenähert trapezartig ausgebildet ist.

3. Lagereinheit (7) nach einem der Patentansprüche 1 und 2, **dadurch gekennzeichnet, dass** der trogartige Fortsatz (8) mit mindestens einer Bohrung ausgebildet ist, in welche ein der Verbindung der Lagereinheit (7) mit dem zugeordneten Ende des Tragbalkens [2] dienender Schraubbolzen (81) einsetzbar ist.

4. Lagereinheit (7) nach einem der Patentansprüche 1 bis 3, **dadurch gekennzeichnet, dass** der trogartige Fortsatz (8) gegenüber dem Lagerzapfen (73) derart versetzt angeordnet ist, dass bei der Verbindung der Lagereinheit (7) mit einem Tragbalken (2) die Lagerachse der Tragrolle (5, 5a) und die Mittelachse des Tragbalkens (2) zumindest angenähert koaxial sind.

## Claims

1. A bearing unit (7) for the support pulleys (5, 5a) of a conveying installation for transporting goods by means of a conveyor belt (1), which belt is guided at both ends of the installation over return drums and which is fastened to the underside of supporting beams (2) oriented across the direction of movement of the conveyor belt (1) and located at a distance from one another in the direction of movement of the conveyor belt (1), support pulleys (5, 5a) being provided in each case at the two ends of the supporting beams (2), which support pulleys (5, 5a) run along two pairs of supporting cables (6, 6a) or supporting rails of the conveying installation, which pairs are respectively associated with the carrying or return run of the conveyor belt (1), and the bearing unit (7) being provided with a bearing journal (73), which comprises an extension (8), which may be fastened detachably to the associated supporting beam (2), **characterised in that** the extension (8) takes the form of an upwardly open trough, on which the associated end of the supporting beam (2) may be placed and detachably fastened thereto.

2. A bearing unit (7) according to claim 1, **characterised in that** the inner surface of the trough-like extension (8) is approximately trapezoidal in cross section.

3. A bearing unit (7) according to either one of claims 1 and 2, **characterised in that** the trough-like extension (8) is provided with at least one drill hole, into which a bolt (81) may be inserted which serves to connect the bearing unit (7) to the associated end of the supporting beam (2).

4. A bearing unit (7) according to any one of claims 1 to 3, **characterised in that** the trough-like extension (8) is arranged offset relative to the bearing journal (73) in such a way that, when the bearing unit (7) is connected to a supporting beam (2), the bearing axis of the support pulley (5, 5a) and the centre axis of the supporting beam (2) are at least approximately coaxial.

## Revendications

1. Unité de coussinet (7) pour les galets porteurs (5, 5a) d'un convoyeur pour le transport de produits à l'aide d'un transporteur à courroie (1) qui passe aux deux extrémités du convoyeur sur des tambours de renvoi et qui est fixé au côté inférieur de poutres porteuses (2) orientées transversalement par rapport au sens de déplacement du convoyeur à courroie (1) et espacées les unes des autres dans le sens de déplacement du convoyeur à courroie (1), étant précisé qu'il est prévu aux deux extrémités des poutres (2) des galets porteurs (5, 5a) qui roulent le long de deux paires de câbles porteurs (6, 6a) ou de rails porteurs du convoyeur qui sont associées au brin d'avance et au brin de retour du convoyeur à courroie (1), et que l'unité de coussinet (7) est pourvue d'un tourillon (73) qui présente un prolongement (8) apte à être fixé de manière amovible à la poutre associée (2), **caractérisée en ce que** le prolongement (8) est conçu comme une auge ouverte vers le haut, sur laquelle l'extrémité associée de la poutre (2) peut être posée et fixée de manière amovible.

2. Unité de coussinet (7) selon la revendication 1, **caractérisée en ce que** la surface intérieure du prolongement en forme d'auge (8) a une section transversale approximativement trapézoïdale.

3. Unité de coussinet (7) selon l'une des revendications 1 et 2, **caractérisée en ce que** le prolongement en forme d'auge (8) est pourvu d'au moins un perçage dans lequel peut être introduite une tige filetée (81) qui sert à relier l'unité de coussinet (7) à l'extrémité associée de la poutre (2).

4. Unité de coussinet (7) selon l'une des revendications 1 à 3, **caractérisée en ce que** le prolongement en forme d'auge (8) est décalé par rapport au tourillon (73) de telle sorte que lors de la liaison entre l'unité de coussinet (7) et une poutre (2), l'axe de montage du galet porteur (5, 5a) et l'axe médian de la poutre (2) soient au moins approximativement coaxiaux.
